(19) **Europäisches Patentamt / European Patent Office / Office européen des brevets**

(11) **EP 4 681 941 A1**

(12) **EUROPEAN PATENT APPLICATION**
published in accordance with Art. 153(4) EPC

(43) Date of publication:
**21.01.2026 Bulletin 2026/04**

(21) Application number: **24770900.9**

(22) Date of filing: **12.03.2024**

(51) International Patent Classification (IPC):
**B60C 9/00** *(2006.01)*    **B60C 19/00** *(2006.01)*
**D07B 1/06** *(2006.01)*

(52) Cooperative Patent Classification (CPC):
**B60C 9/00; B60C 19/00; D07B 1/06**

(86) International application number:
**PCT/JP2024/009634**

(87) International publication number:
**WO 2024/190795 (19.09.2024 Gazette 2024/38)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.03.2023   JP 2023040160**

(71) Applicant: BRIDGESTONE CORPORATION
Chuo-ku
Tokyo 104-8340 (JP)

(72) Inventors:
- **TOKUTOMI, Kazutaka**
  **Tokyo 104-8340 (JP)**
- **KAWASHIMA, Keisuke**
  **Tokyo 104-8340 (JP)**
- **SHIZUKU, Takahisa**
  **Tokyo 104-8340 (JP)**
- **SATO, Takayuki**
  **Tokyo 104-8340 (JP)**

(74) Representative: **Marks & Clerk LLP**
**15 Fetter Lane**
**London EC4A 1BW (GB)**

(54) **TIRE**

(57)    To provide a tire in which a decrease in durability is suppressed, even though steel filaments derived from recycled iron are used. In order to solve the above problem, the present disclosure provides a tire including a carcass layer including a steel cord, wherein the steel cord is composed of steel filaments and 20 mass% or more of the steel filaments are derived from recycled iron, and the filaments derived from the recycled iron have an N element content of 60 mass ppm or more.

EP 4 681 941 A1

**Description**

TECHNICAL FIELD

The present disclosure relates to a tire.

BACKGROUND

In recent years, from the perspective of resource recycling, it has been required to use recycled materials for various members used in tires. For example, PTL 1 refers to the use of organic fibers derived from recycling, particularly fibers made of recycled polyethylene terephthalate (PET), as reinforcing members for tires.

CITATION LIST

Patent Literatures

PTL 1: EP 3753965 A1

SUMMARY

(Technical Problem)

On the other hand, as reinforcing members for tires, in addition to organic fibers, steel cords are also used. Therefore, from the perspective of resource recycling, the use of steel cords made from steel derived from recycled iron has been required.

However, steel cords taken from waste iron scrap or from tires may contain coating materials such as plating and various additives, and these are often included as impurities in the recycled iron. Steel filaments (wire rods) manufactured using such recycled iron as a raw material may have lower strength compared to general steel filaments, and when using steel cords made from steel filaments derived from recycled iron as reinforcing members for the reinforcement layer of a tire, it is necessary to design so as not to affect the durability of the tire.

Therefore, the present disclosure addresses the above conventional problems, and an object thereof is to provide a tire in which a decrease in durability is suppressed, even though steel filaments derived from recycled iron are used.

(Solution to Problem)

The gist configuration of the tire of the present disclosure that solves the above problem is as follows.

[1] A tire comprising a carcass layer including a steel cord, wherein

the steel cord is composed of steel filaments, 20 mass% or more of the steel filaments are derived from recycled iron, and
the filaments derived from the recycled iron have an N element content of 60 mass ppm or more.
The tire of the present disclosure described in [1] is such that, even though steel filaments derived from recycled iron are used, a decrease in durability is suppressed.

[2] The steel filaments derived from the recycled iron have a C element content of 0.7 to 1.0 mass%, a Cu element content of 0.01 to 0.4 mass%, and a Cr element content of 0.05 to 0.3 mass%, according to the tire described in [1]. The tire described in [2] is preferable from an environmental perspective, since it uses steel cords that can be manufactured from general recycled iron.
[3] The steel filaments derived from the recycled iron have a Cu element content of 0.05 to 0.4 mass%, according to the tire described in [2].
The tire described in [3] is also preferable from an environmental perspective, since it uses steel cords that can be manufactured from general recycled iron.
[4] The steel filaments derived from the recycled iron have a diameter of 0.15 to 0.40 mm, according to any one of the tires described in [1] to [3].
The tire described in [4] is such that the steel filaments are less likely to break and have high durability.
[5] The steel cord further includes steel filaments derived from non-recycled iron, and

the steel filaments derived from the non-recycled iron have an N element content of 20 to 40 mass ppm, a C element content of 0.7 to 0.85 mass%, a Cu element content of 0 to 0.1 mass%, and a Cr element content of 0 to 0.1 mass%, according to any one of the tires described in [1] to [4].

The tire described in [5] is such that a decrease in durability is further suppressed.

[6] The tire according to any one of [1] to [5], wherein the steel filaments derived from the recycled iron are provided with a plating layer, and

a total Cu element content in the steel filaments derived from the recycled iron and the plating layer is 0.2 to 1.0 mass%.

The tire described in [6] has improved durability.

(Advantageous Effect)

According to the present disclosure, it is possible to provide a tire in which a decrease in durability is suppressed, even though steel filaments derived from recycled iron are used.

BRIEF DESCRIPTION OF THE DRAWINGS

In the accompanying drawings:

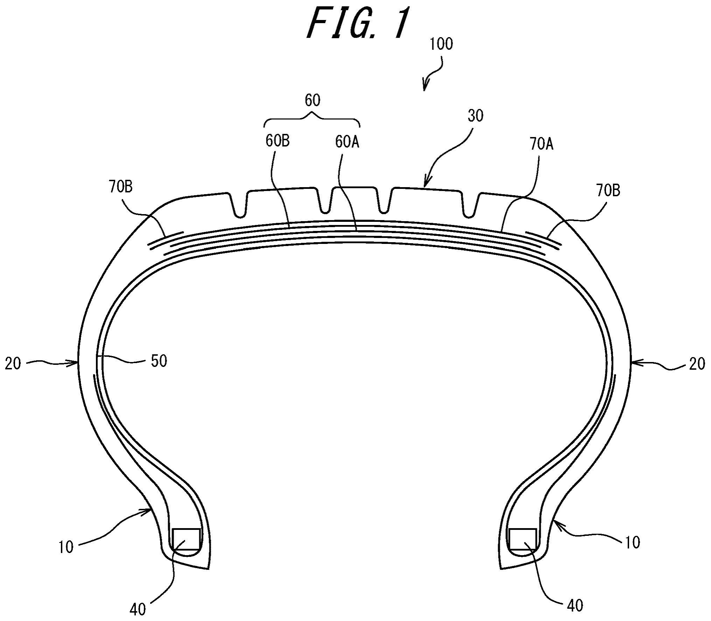

FIG. 1 is a cross-sectional view of one embodiment of a tire of the present disclosure.

DETAILED DESCRIPTION

Hereinafter, the tire of the present disclosure will be exemplified and described in detail based on its embodiment.

<Definitions>

The compounds described in the present specification may be partially or entirely derived from fossil resources, may be derived from biological resources such as plant resources, or may be derived from recycled resources such as used tires. Further, they may be derived from a mixture of any two or more of fossil resources, biological resources, and recycled resources.

In the present specification, the N (nitrogen) element content, C (carbon) element content, Cu (copper) element content, Cr (chromium) element content, and Fe (iron) element content of steel filaments derived from recycled iron and steel filaments derived from non-recycled iron, as well as the total Cu element content in the steel filaments derived from recycled iron and the plating layer, refer to the ladle value (i.e., the ladle value measured for the molten steel) in a state where the raw steel material is melted, and are values measured by spark discharge emission spectroscopic analysis.

<Tire>

The tire of the present embodiment includes a carcass layer (carcass ply) containing a steel cord.

In the tire of the present embodiment, the steel cord is composed of steel filaments, 20 mass% or more of the steel filaments are derived from recycled iron, and the filaments derived from the recycled iron are characterized in that the N element content is 60 mass ppm or more.

The tire of the present embodiment includes a carcass layer containing a steel cord, the steel cord is composed of steel filaments, and 20 mass% or more of the total mass of the steel filaments in the carcass layer are derived from recycled iron.

When the proportion of steel filaments derived from recycled iron in the entire steel cord of the carcass layer is 20 mass% or more, it is possible to sufficiently circulate resources while suppressing a decrease in the durability of the carcass layer.

The recycled iron serving as the raw material for the steel filaments derived from recycled iron is not particularly limited as long as it is recycled, and may be, for example, derived from scrap iron or steel cord taken out from tires. Further, from the viewpoint of reducing $CO_2$ emissions, it is preferable that the recycled iron is derived from an electric furnace (electric furnace steelmaking method). In the electric furnace steelmaking method, for example, an arc discharge is generated in an electric furnace, the raw material is melted by the heat of the discharge, impurities are removed, and iron (steel material) can be obtained. On the other hand, in the blast furnace method, which is generally used in conventional steelmaking, for example, iron ore is reduced using coke derived from coal in a blast furnace to obtain iron (steel material), and therefore, a large amount of $CO_2$ is inevitably generated. In general, the amount of $CO_2$ emissions in an electric furnace is about 1/4 that of a blast furnace, so by using recycled iron derived from an electric furnace for the steel filaments, $CO_2$ emissions can be significantly reduced.

In the tire of the present embodiment, the steel filaments derived from recycled iron are required to have an N (nitrogen) element content of 60 mass ppm or more.

Generally, new iron such as that obtained from a blast furnace has high purity and an N element content of less than 60 mass ppm, whereas general recycled iron (i.e., recycled iron that is not highly refined) has an N element content of 60 mass ppm or more. The steel filaments derived from recycled iron can be produced using such general recycled iron as a raw material, and since high-level refining is not required, the manufacturing process is not complicated, energy consumption can be reduced, and $CO_2$ emissions can also be reduced, which is preferable from an environmental perspective. From a similar viewpoint, it is preferable that the steel material derived from recycled iron has an N element content of 70 mass ppm or more.

Further, from the viewpoint of durability, it is preferable that the N element content of the steel filaments derived from recycled iron is 200 mass ppm or less, and more preferably less than 90 mass ppm. Note that the reinforcing cord of the carcass layer of the tire is subjected to loads from various directions during tire manufacture and use. Therefore, the steel filaments constituting the reinforcing cord of the carcass layer of the tire are required to have excellent durability against twisting as one index of durability. Steel filaments made from steel material derived from recycled iron with an N element content of less than 90 mass ppm are particularly excellent in durability against twisting.

Further, it is preferable that the steel filaments derived from recycled iron have a C (carbon) element content of 0.7 to 1.0 mass%, and more preferably 0.7 to 0.85 mass%. Recycled iron with a C element content within the above range does not require high-level refining, is easily obtainable, and steel filaments with a C element content within the above range can be produced from general recycled iron. In addition, recycled iron (steel material) with a C element content of 0.85 mass% or less has high ductility, and even when processed into steel filaments with a small diameter, breakage can be prevented. Therefore, a tire using steel filaments derived from recycled iron with a C element content of 0.7 to 0.85 mass% is less likely to have steel filaments break and has high durability.

Furthermore, it is preferable that the steel filaments derived from recycled iron have a Cu (copper) element content of 0.01 to 0.4 mass%, and more preferably 0.05 to 0.4 mass%. Recycled iron with a Cu element content within the above range does not require high-level refining, is easily obtainable, and steel filaments with a Cu element content within the above range can be produced from general recycled iron.

Furthermore, it is preferable that the steel filaments derived from recycled iron have a Cr (chromium) element content of 0.05 to 0.3 mass%. Recycled iron with a Cr element content within the above range does not require high-level refining, is easily obtainable, and steel filaments with a Cr element content within the above range can be produced from general recycled iron.

The steel filaments derived from recycled iron are required to have an N (nitrogen) element content of 60 mass ppm or more, and it is preferable that the C element content is 0.7 to 1.0 mass%, the Cu element content is 0.05 to 0.4 mass%, and the Cr element content is 0.05 to 0.3 mass%. Such steel filaments can be produced using general recycled iron as a raw material, and since high-level refining is not required, the manufacturing process is not complicated and energy consumption can be reduced. In addition, since $CO_2$ emissions can also be reduced, it is preferable from an environmental perspective.

Note that the steel filaments derived from recycled iron preferably have iron as the main component, with an Fe (iron) element content of 98 mass% or more.

It is preferable that the steel filaments derived from recycled iron have a diameter of 0.15 mm to 0.40 mm. When the diameter of the steel filaments derived from recycled iron is 0.15 mm or more, they are excellent in strength and durability, and are less likely to break during the drawing process. Further, when the diameter of the steel filaments derived from recycled iron is 0.40 mm or less, the steel filaments can follow the deformation of the tire, are less likely to break, and also have the advantage of being lightweight. That is, a tire using steel filaments derived from recycled iron with a diameter of 0.15 mm to 0.40 mm has high durability.

The steel filaments derived from recycled iron are manufactured from recycled iron, and the manufacturing method is not particularly limited. For example, steel material derived from scrap iron or steel cord taken out from tires may be subjected to a drawing process to produce steel filaments derived from recycled iron.

It is also preferable that the steel filaments derived from recycled iron are provided with a plating layer covering the steel filaments.

Here, it is preferable that the total Cu element content in the steel filaments and the plating layer is 0.2 to 1.0 mass%. Note that the Cu element content refers to the content of Cu element in the total of the steel filament portion derived from recycled iron and the plating layer portion.

When the total Cu element content in the steel filaments derived from recycled iron and the plating layer is 0.2 mass% or more, the rubber-steel adhesiveness can be ensured, and when it is 1.0 mass% or less, the quality of the steel filaments can be ensured. When the total Cu element content in the steel filaments derived from recycled iron and the plating layer is 0.2 to 1.0 mass%, the adhesiveness between the steel filaments derived from recycled iron and the coating rubber is high, and the durability of the tire is improved.

For example, a plating layer can be provided by plating the surface of the steel filaments derived from recycled iron. Examples of such plating include brass plating and copper plating, and among these, brass plating is preferable from the viewpoint of adhesiveness with the coating rubber. In brass plating, the ratio of copper to zinc (copper:zinc) is preferably in the range of 60:40 to 70:30 by mass.

The steel cord of the carcass layer may further include steel filaments derived from non-recycled iron, and it is preferable that the steel filaments derived from non-recycled iron have an N (nitrogen) element content of 20 to 40 mass ppm, a C (carbon) element content of 0.7 to 0.85 mass%, a Cu (copper) element content of 0 to 0.1 mass%, and a Cr (chromium) element content of 0 to 0.1 mass%. When the steel cord of the carcass layer includes steel filaments derived from non-recycled iron having such a composition, a further decrease in the durability of the steel cord can be suppressed, and a further decrease in the durability of the tire can be suppressed. Note that the steel filaments derived from non-recycled iron preferably have iron as the main component, with an Fe (iron) element content of 98 mass% or more.

The diameter of the steel filaments derived from non-recycled iron is not particularly limited, and may be the same as or different from the diameter of the steel filaments derived from recycled iron.

Further, it is preferable that the steel filaments derived from non-recycled iron are provided with a plating layer covering the steel filaments. The plating layer of the steel filaments derived from non-recycled iron may be the same as or different from the plating layer of the steel filaments derived from recycled iron.

As the non-recycled iron serving as the raw material for the steel filaments derived from non-recycled iron, it is preferable, from the viewpoint of the durability of the steel cord, to use one with few impurities, and for example, iron derived from iron ore (iron derived from a blast furnace) is preferable.

The steel filaments constituting the carcass layer preferably satisfy the following formula when the diameter of the filament is X (mm) and the tensile strength of the filament is Y (MPa):

$$4000 - 2000X \leqq Y \leqq 4500 - 2000X$$

By using a cord having a structure in which filaments satisfying the above formula are twisted together in the carcass layer, the strength of the carcass layer can be improved, the plunger level can be improved, and the anti-cut resistance of the tire can be supplemented.

Here, the tensile strength of the filament is determined in accordance with ISO 17832:2009.

From the viewpoint of fatigue resistance, it is preferable that the hardness of the surface layer of the filament constituting the cord of the carcass layer is 90 to 110% relative to the hardness of the inner layer, and particularly preferably 100%. The hardness can be measured, for example, by Vickers hardness. The surface layer of the filament refers to the layer up to a depth of 0.01 mm from the outermost surface, and the inner side thereof refers to the inner layer of the filament. The hardness can be measured at a depth of 0.005 mm from the outermost surface for the surface layer, and at a region deeper than 0.04 mm for the inner layer.

In the tire of the present embodiment, the arrangement of the steel filaments derived from recycled iron is not particularly limited. For example, (1) a steel cord in which steel filaments derived from recycled iron and steel filaments derived from non-recycled iron are used together may be disposed in the same carcass layer, or (2) a carcass layer composed of a steel cord using steel filaments derived from recycled iron and a carcass layer including a steel cord composed of steel filaments derived from non-recycled iron may be provided, respectively. In either mode, the steel filaments derived from non-recycled iron can supplement the strength of the steel filaments derived from recycled iron and suppress a decrease in the durability of the tire.

The structure of the steel cord constituting the carcass layer is not particularly limited, but examples include:

(1) a layer-twisted structure such as an L+M structure or L+M+N structure, in which M or M+N sheath filaments (where M and N are integers greater than 1) are twisted around L core filaments (where L is an integer of 1 or more; the core filaments may be twisted together or bundled without twisting),
(2) a compact structure in which a plurality of steel filaments are twisted together in the same direction and at the same pitch,
(3) a multiple-twisted structure in which a plurality of cords of the above-described layer-twisted structure or compact structure are twisted together,
(4) a structure in which one filament is further wound around the outermost periphery of the above-described layer-twisted structure, compact structure, or multiple-twisted structure cord,

and the like.

The filaments constituting the steel cord may be arranged with gaps between them so that the filaments are not in close contact with each other. In such a structure, rubber easily penetrates into the inside of the cord, thereby improving the durability of the cord.

Further, the surface of the steel filaments or the surface of the steel cord may be coated with a resin. In such a structure, the durability of the steel cord is improved. Examples of the resin include thermoplastic resins and thermoplastic elastomers. Examples of thermoplastic resins include polyamide-based thermoplastic resins, polyester-based thermoplastic resins, olefin-based thermoplastic resins, polyurethane-based thermoplastic resins, polyvinyl chloride-based thermoplastic resins, polystyrene-based thermoplastic resins, and the like. On the other hand, examples of thermoplastic elastomers include polyamide-based thermoplastic elastomers (TPA), polyester-based thermoplastic elastomers (TPC), polystyrene-based thermoplastic elastomers (TPS), polyurethane-based thermoplastic elastomers (TPU), olefin-based thermoplastic elastomers (TPO), thermoplastic rubber vulcanizates (TPV), or other thermoplastic elastomers (TPZ), and the like.

The strength of the carcass layer is preferably 20 kN or more, and preferably 250 kN or less. When the strength of the carcass layer is 20 kN or more, the durability of the tire is improved, and when the strength of the carcass layer is 250 kN or less, both durability and weight can be achieved.

Note that, in the present specification, the strength of the carcass layer is a value measured by a tensile test and converted to the strength per 5 cm.

The tire of the present embodiment can be applied to various vehicles, and can be applied to all types of tires, such as passenger vehicle tires, truck and bus tires, large-sized tires for construction vehicles, and motorcycle tires. Further, the tire of the present embodiment may be a pneumatic tire or a non-pneumatic tire.

(One Embodiment)

Next, one embodiment of the tire of the present disclosure will be exemplified and described in detail with reference to the drawings.

FIG. 1 is a cross-sectional view of one embodiment of the tire of the present disclosure. The tire 100 illustrated in FIG. 1 includes: a pair of bead portions 10; a pair of sidewall portions 20; a tread portion 30; a carcass 50 extending in a toroidal shape between bead cores 40 embedded in the bead portions 10; a belt 60 composed of two belt layers 60A and 60B disposed in the tread portion 30 (more specifically, disposed on the tire radial direction outer side of the crown portion of the carcass 50); a belt protective layer (also called a "cap layer") 70A disposed so as to cover the entire belt 60 on the tire radial direction outer side of the belt 60; and a pair of belt protective layers (also called "layer layers") 70B disposed so as to cover only both end portions of the belt protective layer 70A.

In the tire 100 illustrated in FIG. 1, the carcass 50 is composed of one or a plurality of carcass plies, and includes a main body portion extending in a toroidal shape between a pair of bead cores 40 respectively embedded in the bead portions 10, and a turn-up portion wound radially outward around each bead core 40 from the inner side to the outer side in the tire width direction.

Note that, in the tire of the present disclosure, the number of carcass plies and the structure are not limited thereto. Here, the carcass ply constituting the carcass 50 is preferably formed by coating a plurality of reinforcing cords extending in a direction substantially perpendicular to the tire circumferential direction (for example, extending at an angle of 70 to 90°) with coating rubber, that is, the carcass 50 is preferably a radial carcass. As the reinforcing cord of the carcass 50, in addition to organic fiber cords such as polyethylene terephthalate cord, nylon cord, and rayon cord, a steel cord may also be used.

Further, the belt 60 of the tire 100 illustrated in FIG. 1 is composed of two belt layers 60A and 60B, and each belt layer 60A, 60B is usually formed by coating a steel cord extending at an inclination (for example, at an angle of 15 to 40°) with respect to the tire equatorial plane with coating rubber, and further, the two belt layers 60A and 60B are laminated so that the steel cords constituting the belt layers 60A and 60B cross each other across the tire equatorial plane to constitute the belt 60.

Note that, in FIG. 1, the belt 60 is composed of two belt layers 60A and 60B, but in the tire of the present disclosure, the number of belt layers constituting the belt may be one or more, and is not limited thereto.

In the tire 100 illustrated in FIG. 1, the belt protective layers 70A and 70B are formed by covering reinforcing cords, which are arranged substantially parallel to the tire circumferential direction (for example, at an angle of 0 to 5° with respect to the tire circumferential direction), with coating rubber. The belt protective layers 70A and 70B are formed by continuously spirally winding, in the tire circumferential direction, a narrow strip prepared by covering reinforcing cords with coating rubber. In this case, since there is no joint portion in the tire circumferential direction, the uniformity of the tire is improved, and since there is no joint portion, concentration of strain at the joint portion can also be prevented. As the reinforcing cords of the belt protective layers 70A and 70B, organic fiber cords such as polyester including polyethylene terephthalate (PET), polyethylene naphthalate (PEN), polyethylene furanoate (PEF), polyamide such as 6-nylon®, 6,6-nylon®, 4,6-nylon®, aramid, and cellulose such as rayon and lyocell can be used.

The raw material of the organic fiber cord is not particularly limited, and may be, for example, derived from synthetic products, or derived from biological resources such as plant resources, animal resources, or microbial resources, or may be derived from mechanical recycling in which resin products are pulverized, melted, and re-spun, or may be derived from chemical recycling in which resin products are depolymerized and repolymerized.

Note that, although the tire 100 illustrated in FIG. 1 includes the belt protective layer 70A and the belt protective layer 70B, a tire in which either or both of the belt protective layer 70A and the belt protective layer 70B are omitted is also one embodiment of the tire of the present disclosure. Further, in the tire 100 illustrated in FIG. 1, each of the belt protective layers 70A and 70B is a single layer, but two or more layers may be used.

In the carcass 50, the belt 60 (belt layers 60A and 60B), and the belt protective layers 70A and 70B, the coating rubber covering the reinforcing member (reinforcing cord) is not particularly limited, and various elastomers can be applied.

The elastomer preferably has a 50% modulus value, as measured in accordance with JIS K 6251 (2010), of 1.5 MPa or more, more preferably 1.8 MPa or more, and still more preferably 2.0 MPa or more.

As the main component of the elastomer, there may be mentioned natural rubber (NR), isoprene rubber (IR), epoxidized natural rubber, styrene-butadiene rubber (SBR), butadiene rubber (BR, high-cis BR, and low-cis BR), nitrile rubber (NBR), hydrogenated NBR, hydrogenated SBR, and other diene rubbers and their hydrogenated products; ethylene-propylene rubber (EPDM, EPM), maleic acid-modified ethylene-propylene rubber (M-EPM), butyl rubber (IIR), isobutylene-aromatic vinyl or diene-based monomer copolymers, acrylic rubber (ACM), ionomer, and other olefin-based rubbers; Br-IIR, Cl-IIR, brominated isobutylene-para-methylstyrene copolymer (Br-IPMS), chloroprene rubber (CR), hydrin rubber (CHR), chlorosulfonated polyethylene rubber (CSM), chlorinated polyethylene rubber (CM), maleic acid-modified chlorinated polyethylene rubber (M-CM), and other halogen-containing rubbers; methylvinyl silicone rubber, dimethyl silicone rubber, methylphenylvinyl silicone rubber, and other silicone rubbers; polysulfide rubber and other sulfur-containing rubbers; vinylidene fluoride-based rubber, fluorinated vinyl ether-based rubber, tetrafluoroethylene-propylene-based rubber, fluorosilicone-based rubber, fluorophosphazene-based rubber, and other fluororubbers; and thermoplastic elastomers such as styrene-based elastomers, olefin-based elastomers, ester-based elastomers, urethane-based elastomers, and polyamide-based elastomers. The 50% modulus value of the elastomer (coating rubber) is a value measured in accordance with JIS K 6251 (2010) after vulcanizing the rubber composition of each sample at 145°C for 40 minutes to obtain vulcanized rubber.

In addition to sulfur, vulcanization accelerator, and carbon black, the elastomer may be appropriately blended with age resistor, zinc oxide (zinc white), stearic acid, and other additives commonly used in rubber products such as tires.

EXAMPLES

The present disclosure will be described in more detail below with reference to examples, but the present disclosure is not limited to the following examples.

(Steel Filaments for Testing)

Steel filament 1 produced from recycled iron derived from an electric furnace and steel filament 2 were prepared. Here, the N element content of steel filament 1 as measured by spark discharge atomic emission spectrometry was 71 mass ppm, and the N element content of steel filament 2 as measured by spark discharge atomic emission spectrometry was 90 mass ppm. The durability against twisting of these steel wires was evaluated by the following method.

(Twist Test)

Both ends of a test steel wire with a length of 20 cm were fixed, and the wire was twisted by rotating in one direction (clockwise with respect to the axis of the steel wire) until the test steel wire broke, and the total number of rotations until breakage was measured and evaluated according to the following criteria. The results are presented in Table 1.

Excellent: Total number of rotations until breakage is 50 or more
Good: Total number of rotations until breakage is 20 to 49
Poor: Total number of rotations until breakage is 19 or less

[Table 1]

|  | Steel Filament 1 | Steel Filament 2 |
|---|---|---|
| Nitrogen Content (mass ppm) | 71 | 90 |
| Evaluation Results of Twist Test | Excellent | Poor |

From Table 1, it can be seen that steel filament 1, which has an N element content of less than 90 mass ppm, is excellent in durability against twisting.

REFERENCE SIGNS LIST

100: tire
10: bead portion
20: sidewall portion
30: tread portion
40: bead core
50: carcass
60: belt
60A, 60B: belt layer
70A, 70B: belt protective layer

**Claims**

1. A tire comprising a carcass layer including a steel cord,

   wherein the steel cord is composed of steel filaments and 20 mass% or more of the steel filaments are derived from recycled iron, and
   the filaments derived from the recycled iron have an N element content of 60 mass ppm or more.

2. The tire according to claim 1, wherein the steel filaments derived from the recycled iron have a C element content of 0.7 to 1.0 mass%, a Cu element content of 0.01 to 0.4 mass%, and a Cr element content of 0.05 to 0.3 mass%.

3. The tire according to claim 2, wherein the steel filaments derived from the recycled iron have a Cu element content of 0.05 to 0.4 mass%.

4. The tire according to claim 1 or 2, wherein the steel filaments derived from the recycled iron have a diameter of 0.15 to 0.40 mm.

5. The tire according to claim 1 or 2, wherein the steel cord further includes steel filaments derived from non-recycled iron, and
   the steel filaments derived from the non-recycled iron have an N element content of 20 to 40 mass ppm, a C element content of 0.7 to 0.85 mass%, a Cu element content of 0 to 0.1 mass%, and a Cr element content of 0 to 0.1 mass%.

6. The tire according to claim 1 or 2, wherein the steel filaments derived from the recycled iron are provided with a plating layer, and
   a total Cu element content in the steel filaments derived from the recycled iron and the plating layer is 0.2 to 1.0 mass%.

## FIG. 1

EP 4 681 941 A1

## INTERNATIONAL SEARCH REPORT

| International application No. |
|---|
| **PCT/JP2024/009634** |

| | |
|---|---|
| **A.** | **CLASSIFICATION OF SUBJECT MATTER** |
| | ***B60C 9/00***(2006.01)i; ***B60C 19/00***(2006.01)i; ***D07B 1/06***(2006.01)i |
| | FI: B60C9/00 K; B60C19/00 L; D07B1/06 A |

According to International Patent Classification (IPC) or to both national classification and IPC

| | |
|---|---|
| **B.** | **FIELDS SEARCHED** |

Minimum documentation searched (classification system followed by classification symbols)

B60C1/00-B60C19/12

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| Y | JP 2020-76020 A (EVER CLEAN KK) 21 May 2020 (2020-05-21)<br>claims, paragraph [0016] | 1-6 |
| Y | 日鉄総研株式会社, カーボンニュートラルを踏まえた我が国金属産業の持続的発展に向けた調査事業報告書, February 2022, non-official translation (NITTETSU SOKEN KK. Research report for sustainable development of Japanese metal industry based on carbon neutrality.)<br>pp. 4-6, 33, line 17, pp. 33, line 27 to p. 34, line 4 | 1-6 |
| X | JP 2021-161445 A (NIPPON STEEL CORPORATION) 11 October 2021 (2021-10-11)<br>claims, paragraphs [0059]-[0069], tables 1, 3, steel D1, test no. 6 | 1-4, 6 |
| Y | | 5 |
| Y | JP 2000-144323 A (SUMITOMO METAL INDUSTRIES, LTD.) 26 May 2000 (2000-05-26)<br>claims, paragraph [0001], steels 1-5, 7-10 | 5 |
| Y | JP 60-152659 A (NIPPON STEEL CORP.) 10 August 1985 (1985-08-10)<br>claims, test material I, p. 5, lines 7-19 | 5 |

☑ Further documents are listed in the continuation of Box C. ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 April 2024** | **14 May 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**EP 4 681 941 A1**

**INTERNATIONAL SEARCH REPORT**

International application No.

**PCT/JP2024/009634**

C.    DOCUMENTS CONSIDERED TO BE RELEVANT

| Category* | Citation of document, with indication, where appropriate, of the relevant passages | Relevant to claim No. |
|---|---|---|
| Y | JP 9-59744 A (KAWASAKI STEEL CORP.) 04 March 1997 (1997-03-04)<br>claims, paragraphs [0002]-[0004], [0013], test no. 1-2, 4-8, 10-18 | 5 |

**INTERNATIONAL SEARCH REPORT**
Information on patent family members

International application No.

**PCT/JP2024/009634**

| Patent document cited in search report | | | Publication date (day/month/year) | Patent family member(s) | Publication date (day/month/year) |
|---|---|---|---|---|---|
| JP | 2020-76020 | A | 21 May 2020 | (Family: none) | |
| JP | 2021-161445 | A | 11 October 2021 | (Family: none) | |
| JP | 2000-144323 | A | 26 May 2000 | (Family: none) | |
| JP | 60-152659 | A | 10 August 1985 | (Family: none) | |
| JP | 9-59744 | A | 04 March 1997 | (Family: none) | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3753965 A1